# EUROPÄISCHE PATENTSCHRIFT

(11) **EP 1 649 183 B1**
(45) Veröffentlichungstag und Bekanntmachung des Hinweises auf die Patenterteilung: **30.12.2009**
(21) Anmeldenummer: 04740693.9
(22) Anmeldetag: 06.07.2004
(51) Int. Cl.: F16D 23/02, F16D 69/02

(54) **SYNCHRONRING**
SYNCHRONIZER RING
ANNEAU DE SYNCHRONISATION

(30) Priorität: 29.07.2003 DE 10334895
(43) Veröffentlichungstag der Anmeldung: 26.04.2006
(73) Patentinhaber: Diehl Metall Stiftung & Co. KG, 90552 Röthenbach (DE)
(72) Erfinder: HOLDERIED, Meinrad, 91338 Igensdorf (DE); GEBHARD, Friedrich, 91207 Lauf/Peg (DE)
(74) Vertreter: Diehl Patentabteilung
(86) Internationale Anmeldenummer: PCT/EP2004/007368
(87) Internationale Veröffentlichungsnummer: WO 2005/019673

(56) Entgegenhaltungen:
- EP-A- 1 382 879
- US-A- 5 478 642
- US-A- 6 065 579
- US-B1- 6 221 475

## Beschreibung

Die Erfindung betrifft die Verwendung eines ein Kohlefasergewebe und einen Kunststoff umfassenden verdichteten Werkstoffs für einen Synchronring mit einem Tragkörper aus Metall, umfassend eine konische Reibfläche.

Synchronringe dienen in einem mechanischen Getriebe, insbesondere in einem Fahrzeug-Getriebe, dazu, die während eines Gangwechsels auftretenden Relativgeschwindigkeiten zwischen Gangrad und Getriebewelle aneinander anzugleichen Die Synchronisation wird dabei durch Reibung zwischen den entsprechenden Reibpartnern erzielt. In Getrieben für hochmotorisierte Fahrzeuge unterliegen die Synchronringe aufgrund der hohen Reibbelastung einem erhöhten Verschleiß. Das gleiche gilt für automatisch beschaltete Getriebe, beispielsweise in einem Getriebe eines Nutzfahrzeugs oder in einem Getriebe eines Personenkraftwagens, bei denen hohe Schaltkräfte zur Anwendung kommen. Üblicherweise werden Synchronringe aus Metall gefertigt, bevorzugt aus Messing. Um die Lebensdauer hochbelasteter Synchronringe und damit auch die des Getriebes zu erhöhen, finden seit einiger Zeit Synchronringe der eingangs genannten Art Anwendung, wobei die zusätzliche Reibschicht den Tragkörper vor Verschleiß schützt.

Aus der US 4,267,912 ist ein Synchronring mit einer Reibschicht bekannt, die aus einem Kunstharz mit Zellstoff-Fasern als Verstärkung besteht. Nachteiligerweise hält diese Reibschicht bei hohen Belastungen jedoch nicht den dann herrschenden thermischen Gegebenheiten stand. Auch kann das Getriebeöl nicht hinreichend verdrängt werden, so dass der Reibpartner aufschwimmt, wodurch sich die Reibung verringert.

Zur Lösung des Problems wird gemäß der US 4,878,282 vorgeschlagen, die Reibschicht mit Nuten versehen.

In der US 5,615,758, der US 5,842,551 und der US 5,998,311 ist hierzu ein strukturiertes Kohlefasergewebe und dessen Herstellung beschrieben. Ein derartiges Gewebe ist in der US 6,065,579 für eine Anwendung als Reibschicht für einen Synchronring vorgestellt. Durch den Webvorgang und die Anordnung der Kett- und Füllgarne entsteht eine ausgeprägte dreidimensionale Struktur mit Höhen und Tälern. Das Gewebe wird zur Fixierung mit einem Harz getränkt und anschließend getempert. Aufgrund der dreidimensionalen Struktur kann das Getriebeöl einmal zu Kühlzwecken zu- und abfließen und darüber hinaus im Anpressfall von der Reibschicht leicht verdrängt werden. Der Webvorgang ist jedoch sehr aufwändig und die Herstellung einer solchen Reibschicht teuer.

Die US 4,700,823 offenbart die Anwendung einer Reibschicht aus einem kohlefaserverstärkten Kunststoff für Kupplungs- oder Bremsscheiben. Die Reibschicht wird mittels des relativ aufwändigen und somit teueren Chemical Vapor Deposition Verfahrens (CVD) hergestellt.

In der US 5,851,588 wird eine Reibschicht aus einem kohlefaserverstärkten Kunststoff mit offenen Webmaschen für großflächige plane Reibanwendungen wie Kupplung oder Bremse offenbart, wobei in diesem Fall die Reibschicht durch Liquid-Pressure-Infiltration (LPI) hergestellt ist.

Eine weitere Anwendung einer mittels LPI hergestellten kohlefaserverstärkten Reibschicht für großflächige, plane Reibpartner wie im Falle einer Kupplung oder einer Bremse ist aus der US 5,952,249 bekannt.

Nachteiligerweise werden alle genannten Reibschichten bei den hohen Anpresskräften, wie sie bei Synchronringen aufgrund der konischen und gegenüber Kupplungen oder Bremsen geringeren Reibfläche auftreten, zusammengepresst. Durch den Verlust an axialem Reserveweg besteht die Gefahr einer verkürzten Lebensdauer oder von Frühausfällen.

Aufgabe der vorliegenden Erfindung ist es, eine Verwendung eines ein Kohlefasergewebe und einen Kunststoff umfassenden verdichteten Werkstoffs vorzuschlagen, bei der einen verschleißbeständigen Synchronring erzielbar ist, der gegenüber dem Stand der Technik eine verbesserte Lebensdauer aufweist und kostengünstig ist.

Diese Aufgabe wird erfindungsgemäß durch die Merkmale des Anspruchs 1 gelöst.

Unter einem Synchronring wird dabei auch ein Außenring, ein Innenring oder ein Zwischenring verstanden. Derartige Ringe finden Verwendung in Mehrkonensynchronisierungen. Der Neigungswinkel der konischen Reibfläche beträgt üblicherweise zwischen 6° und 10°.

Unter einem mit Kohlefasern verstärkten Kunststoff wird hierbei ein Werkstoff verstanden, der zur Verstärkung eingelagerte Kohlefasern und einen gewissen Anteil eines Kunststoffes umfasst. Im Sinne des vorliegenden Dokuments wird auch ein Werkstoff als ein mit Kohlefasern verstärkter Kunststoff verstanden, bei welchem die Kohlefasern in ein Material mit einem geringen Anteil eines Kunststoffs und einem überwiegenden Anteil eines anderen Materials eingelagert sind.

Durch die Einlagerung der Kohlefasern erhält der Werkstoff die erforderlichen Reibeigenschaften und die gewünschte Verschleißbeständigkeit.

Überraschenderweise hat sich gezeigt, dass ein mit Kohlefasern verstärkter Kunststoff die Lebensdauer des Synchronrings erhöht, wenn er verdichtet wird. Dies kann während oder am Ende des Herstellungsprozesses geschehen. Auf diese Weise erfährt der Werkstoff eine Kompression, die ihn vor weitere Komprimierung während des Schalt- oder Synchronisierungsvorgänge schützt. Die Abnahme des axialen Spalts wird also nicht durch ein Zusammenpressen des Materials gefördert. Gegenüber der bisherigen Überzeugung der Fachwelt zeigt ein derartiger verdichteter oder komprimierter Werkstoff aber keine Verschlechterung seiner Reibeigenschaften infolge eines Aufschwimmens des Reibpartners. Erstaunlicherweise hat sich gezeigt, dass trotz der Verdichtung des Werkstoffs bei einer Anwendung der Reibschicht auf der konischen Reibfläche des Synchronrings das Getriebeöl in genügender Art und Weise von der Reibfläche weggepresst werden kann. Es kommt zu einem raschen Reibzahlaufbau. Offensichtlich genügen hierzu die verbleibenden Strukturen der Fasern und die Restporosität in dem umgebenden Material.

Erfindungsgemäß beträgt die Dicke der Reibschicht 0,2 bis 0,6 mm, wobei der Werkstoff derart verdichtet ist, dass die Reibschicht bei einer Flächenpressung mit 10 N/mm eine Dickenänderung von weniger als 0,015 mm, vorzugsweise von weniger als 0,01 mm, aufweist.

Ein solch verdichteter Werkstoff zeigt bei der angegebenen Dicke der Reibschicht besonders gute und langanhaltende Reibeigenschaften.

Der Werkstoff wird vorteilhafterweise aus einem Kohlefasergewebe und einem Harz hergestellt. Unter einem Harz wird dabei ein aushärtbarer Kunststoff verstanden. Durch das verdichtete Gewebe, welches durch das Harz fixiert ist, wird die Formstabilität weiter verbessert. Besonders geeignet ist ein Phenolharz. Aber auch andere öl- und temperaturbeständige Harze sind geeignet. Günstig hat es sich erwiesen, eine einzige Gewebelage zu verwenden.

Ausgangspunkt der Herstellung ist das Kohlefasergewebe. Das Kohlefasergewebe wird mit dem Harz getränkt und anschließend zur Aushärtung erwärmt. Während oder nach der Aushärtung kann die Verdichtung des Werkstoffs erfolgen. Dabei kann der Werkstoff mit Drücken größer als 5 bar beaufschlagt werden.

Vorteilhafterweise wird anschließend der Werkstoff derart temperaturbehandelt, dass sich ein Teil des Harzes in Kohlenstoff umsetzt, wobei der Kohlenstoff in amorpher Form und/oder als Graphit vorliegt.. Die Temperaturen liegen dabei zwischen 900 und 1200 °C. Bevorzugt geschieht dies unter Inertgasatmosphäre. Durch einen Kohlenstoffanteil im Harz verbessert sich das Reibverhalten. Auch der Reservewegverlust wird geringer. Der Anteil des Kohlenstoffes kann erhöht werden, wenn nach der Temperaturbehandlung durch Tränkung oder durch Injektion erneut Harz zugeführt wird, und die Arbeitschritte der Temperaturbehandlung wiederholt werden.

Es hat sich gezeigt, dass der Kohlenstoff über die Einsatzdauer der Reibschicht ausgewaschen wird. Die Reibschicht weist dadurch eine verringerte Verschleißbeständigkeit auf. Dieses Problem kann vorteilhafterweise dadurch vermieden werden, dass der umgesetzte Kohlenstoff abschließend durch Harz fixiert wird.

Die Reibschicht ist vorteilhafterweise mit einem temperaturbeständigen und ölresistenten Kleber, beispielsweise einem Phenolharz- oder einem Epoxidharzkleber, mit der Reibfläche verklebt. Der Kleber verbindet sich dabei mit dem Kunststoff oder dringt in die verbliebenen Poren und Öffnungen ein und verbindet damit die Reibschicht mit dem Tragkörper dauerhaft.

Als Material für den Tragkörper eignen sich insbesondere Messing, Stahl, insbesondere durch Sintern hergestellter Stahl, oder ein Verbund aus Stahl und Messing.

Ein Ausführungsbeispiel der Erfindung wird durch eine Zeichnung näher beschrieben. Dabei zeigt:
Fig. 1: Eine Draufsicht eines Synchronrings mit einer Reibschicht.
Fig. 2: Einen Querschnitt durch einen Synchronring mit befestigter Reibschicht.
Fig. 3: Eine vergrößerte Darstellung einer an einem Synchronring befestigten Reibschicht.

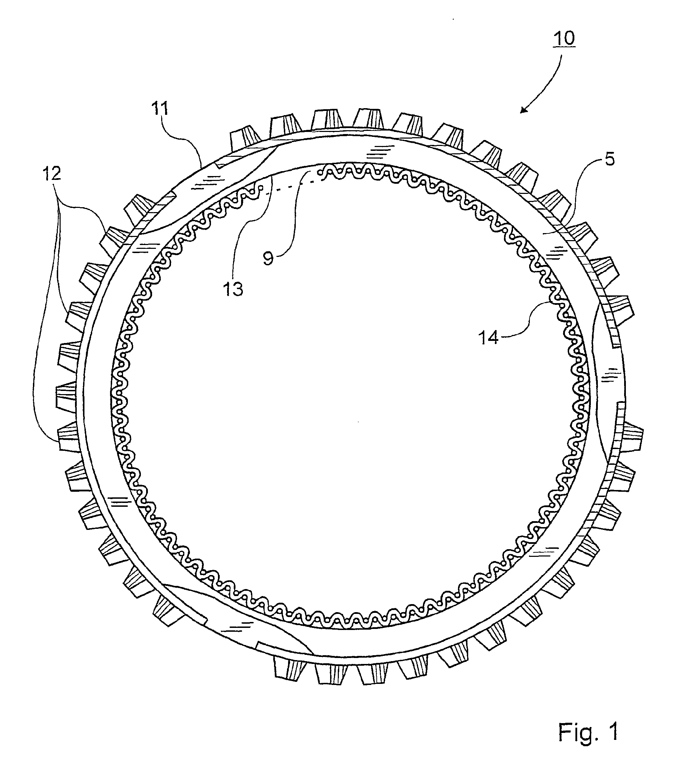

Fig. 1 zeigt eine Draufsicht auf einen Synchronring 10, dessen Außenumfang 11 als eine in ein Gangrad (nicht dargestellt) eines Getriebes mechanisch eingreifende Ausgestaltung Zähne 12 aufweist. An dem Innenumfang 13 des Synchronrings 10 befindet sich eine konische Reibfläche 9, auf der eine Reibschicht 14 befestigt ist. Die Reibschicht 14 steht einem nicht dargestellten Reibpartner gegenüber, der eine zum Synchronring 10 relative Umdrehungsgeschwindigkeit hat. Bei Schaltbetätigung gerät die Reibschicht 14 in Kontakt mit dem Reibpartner, wodurch sich durch Reibung die Relativgeschwindigkeit zwischen den Reibpartnern verringert und diese synchronisiert werden. Der Synchronring 10 ist aus Messing hergestellt.

In einer anderen, nicht dargestellten Ausführungsform kann die Reibschicht 14 am Außenumfang 11 des Synchronrings 10 und die Zähne 12 am Innenumfang 13 angeordnet sein.

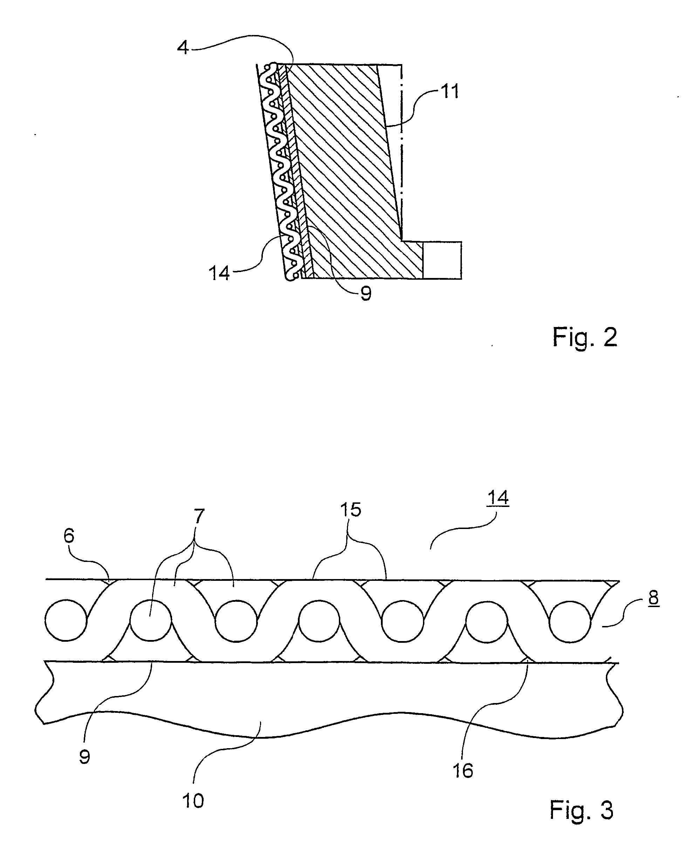

Fig. 2 zeigt einen Querschnitt durch den Synchronring 10 gemäß Fig. 1 mit Reibschicht 14. Der dargestellte Synchronring 10 weist eine konische Reibfläche 9 auf. Dies ist durch den nicht maßstabsgerecht geneigt gezeichneten Innenumfang 13 angedeutet. Die Neigung der Reibfläche beträgt 8°.

Die Reibschicht 14 des Synchronrings 10 umfasst einen verdichteten kohlefaserverstärkten Kunststoff und weist eine Dicke von 0,5 mm auf. Die Kohlefasern sind in Form eines Gewebes einlagig eingebracht. Zur Herstellung wurde das Kohlefasergewebe mit einem Phenolharz getränkt und ausgehärtet.

Anschließend wurde der Werkstoff bei ca. 1100°C unter Inertgas-Atmosphäre derart temperaturbehandelt, dass sich der wesentliche Teil des Harzes in amorphen Kohlenstoff umsetzte.

Anschließend wurde der Werkstoff erneut mit Harz getränkt und die Temperaturbehandlung wiederholt. Weiter wurde danach erneut eine Tränkung mit Harz durchgeführt, wobei eine Fixierung des Gewebes und insbesondere des erzeugten Kohlenstoffes im Harz erfolgte.

Als abschließender Herstellungsschritt wurde der Werkstoff verdichtet. Auf diese Weise weist die Reibschicht 14 bei ihrer Dicke für den Synchronring 10 bei einer Flächenpressung von 10 N/mm eine Verringerung ihrer Dicke von kleiner 0,015 mm auf. Die Reibschicht 14 ist auf die Reibfläche 9 des Synchronrings mit einem Phenolharzkleber aufgeklebt.

Die erforderliche Geometrie der Reibschicht 14 wurde aus einer größeren Einheit (Matte) des Werkstoffs unter Berücksichtigung der konischen Form der Reibfläche (14) herausgeschnitten.

In Fig. 3 ist schematisch die in Figuren 1 und 2 gezeigt verdichtete Reibschicht 14 dargestellt. Die Reibschicht 14 umfasst dabei in einer einzigen Lage ein Kohlefasergewebe 8. Das Gewebe 8 ist dabei aus Fasersträngen 7 gewebt, die eine Mehrzahl von Kohlefasern umfassen. Als Folge des Nachverdichtens sind die Gewebeberge 15 abgeflacht. Es liegen aber teilweise durchgängige Restporen 16 vor. Das Gewebe 8 selbst ist in einer Matrix 6 aus Harz und amorphem Kohlenstoff eingebettet.

Für den Werkstoff wird ein Gewebe verwendet, das zum Beispiel in Form von einem Köper, -Leinwand - oder Atlasgewebe vorliegt.

Im Vergleich zu Köpergewebe mit relativ breiten, durchgezogenen Riefen weist leinwandbindiges Gewebe keine diagonal durchlaufenden Riefen auf, sondern eine schachbrettartige Anordnung von Bindungspunkten mit oben liegendem Kettfaden und Bindungspunkten mit oben liegendem Schussfaden. Gewebe mit Satinbindung bzw. Atlasbindung sind dagegen durch vereinzelt liegende Bindungspunkte gekennzeichnet, so dass sich auch hier keine durchgehenden diagonalen Riefen und Grate ausbilden können.

Bevorzugt wird ein Köpergewebe verwendet, das eine ausgeprägte Rillenstruktur aufweist.

Charakteristisch für die Köperbindung sind diagonal zu den Kett- und Schussfäden über die Gewebefläche laufende Bindungslinien. So hergestellte Gewebe sind durch eine durchgehende, beispielsweise diagonale Streifung aus tiefer liegenden Bereichen, welche als Riefen oder kanalartige Vertiefungen bezeichnet werden und erhöhten Bereichen gekennzeichnet, welche als Grate bezeichnet werden. In vorteilhafter Weise kann dann in den Ölkanäle bildenden Riefen befindliches Öl ungehindert entlang der Oberfläche abfließen und folglich Reibungswärme abtransportieren. Die kanalartigen Riefen oder Vertiefungen können insbesondere beim Befestigen des Reibmaterials auf dem Substrat, beispielsweise einem Synchronring, in jeglicher Richtung ausgerichtet werden, folglich auch in einer ausgezeichneten Richtung, in welcher ein Ölzu- und abfluss von und zu benachbarten Bereichen besonders einfach ist. Insbesondere können die kanalartigen Riefen oder Vertiefungen nach einer vorgegebenen Ölströmung innerhalb eines Kupplungsgehäuses oder eines Gebtriebegehäuses ausgerichtet werden.

In einer besonders bevorzugten Variante wird ein einseitiges Gewebe verwendet, d.h. die Grat- und Riefenstruktur ist auf einer Seite des Gewebes stärker ausgeprägt als auf der anderen. Die stärker strukturierte Seite des Gewebes wird dann als Reiboberfläche vorgesehen, während die glattere Seite für die Klebeverbindung mit dem Substrat besser geeignet ist, da sie eine größere und geschlossenere Adhäsionsfläche aufweist als die Oberfläche mit der Riefen- und Gratstruktur. Ein Beispiel für solche Gewebe mit einer strukturierten und einer glatten Oberfläche ist Gewebe mit der Bindungsart Köper.

Die Faserstränge 7 für die Gewebeherstellung bestehen entweder aus Polyacrylnitril (PAN)-Fäden, die bereits thermisch stabilisiert worden sind, oder ein Gewebe aus PAN-Fäden wird vor der Carbonisierung einer thermischen Stabilisierung unterzogen. Bei der thermischen Stabilisierung werden die PAN-Fäden durch Luftoxidation bei vorzugsweise 200-400°C unter Streckung in eine unschmelzbare Form überführt. Für die Herstellung des oben genannten Gewebes haben sich Garne, gesponnen aus streckgerissenen oxidierten Polyacrylnitrilfäden als besonders geeignet erwiesen. Der Garntiter liegt zwischen 120 und 170 tex. Bevorzugt werden gedrehte Garne verwendet und besonders bevorzugt Zwirne, die durch Verdrehung zweier gegenläufig verdrehter Fasern erhalten werden, oder durch Verdrehung mehrerer Zwirnfasern miteinander erhaltene Faserstränge 7. Ein wesentlicher Vorteil dieser gedrehten Faserstränge 7 besteht darin, dass die einzelnen Fäden sich bei Einwirkung von Druck nicht nebeneinander in der Ebene flach legen können, die Faserstränge 7 also immer eine gewisse räumliche Struktur aufweisen.

Während der Carbonisierung steigt der Kohlenstoffgehalt der Faserstränge 7, und der Verziehungsgrad der Kohlenstoffmatrix in den Fasersträngen 7 vergrößert sich. Die Temperung bei 1000°C führt zu einem Kohlenstoffgehalt von ca. 80 %, der bei höherer Temperatur noch höher wird.

Beispielsweise wird ein massebezogener Kohlenstoffgehalt von 95 % erhalten, wenn die Temperung bei 1800°C erfolgt. Für den oben genannten Bereich von Carbonisierungstemperaturen gilt in grober Näherung: Je höher die Temperatur beim Tempern, desto großer der Kohlenstoffgehalt der Fasern und desto höher sind die thermische Stabilität und der Elastizitätsmodul des Materials.

Das Harz erfüllt in dem Werkstoff mehrere Funktionen. Zunächst wirkt es als Binder, der die Fasern des Gewebes aneinander bindet und in ihrer Lage im Gewebe fixiert. Bei niedrigen Harzgehalten sind die Faserstränge 7 nur mit einem oberflächlichen Harzfilm überzogen, bei höheren Harzgehalten jedoch in einer dicken Harzmatrix eingebettet und damit auch vor mechanischen Beanspruchungen, beispielsweise durch Reibung geschützt. Außerdem wird durch den Binderzusatz das Gewebe mechanisch verstärkt, d.h. es wird steifer und seine Kompressibilität verringert sich.

Der Harzgehalt trägt dazu bei, dass die vorteilhafte Struktur des ursprünglichen Gewebes auch nach dem Tränken mit Harz und nach dem Pressprozess erhalten bleibt. Einerseits muss der Harzgehalt ausreichend hoch sein, um die mechanische Stabilität und die Steifigkeit des Werkstoffs zu gewährleisten, die Kompressiblität herabzusetzen und die Ölpermeabilität der Reibschicht 14 zu reduzieren, andererseits darf der Harzgehalt nicht so groß sein, dass die Grate- und Riefenstruktur durch vollständiges Umschließen mit einer dicken Harzschicht völlig eingeebnet wird.

Es hat sich herausgestellt, dass bei einem massebezogenen Harzanteil im Bereich von 25 bis 50 % die Reibmaterialien auch nach dem Verpressen unter den o.g. Bedingungen noch eine für den Ölfluss geeignete Riefenstruktur aufweisen. Die Rauhigkeiten R_{z} dieser Oberflächen betragen ca. 30 bis 50 µm, wodurch das erfindungsgemäße Reibmaterial wenig zur Bildung hydrodynamischer Filmen neigt, die bei Nassreibelementen unerwünscht sind.

Die Rauhigkeit R_{z} der Reibschicht 14 nimmt durch den Pressvorgang und mit zunehmendem Harzgehalt ab. Außerdem verringern sich mit zunehmenden Harzgehalt die Durchlässigkeit des Werkstoffs für Luft und die Breite der Porengrößenverteilung, wobei dies besonders auf Kosten der kleinen Poren geht. Im Ergebnis des Pressprozesses verringert sich auch die Breite der Porengrößenverteilung, wobei mit zunehmendem Harzgehalt insbesondere die zur Mikrotextur des Materials gehörigen kleinen Poren und Zwischenräume zwischen den einzelnen Fäden verschlossen werden, während die Makrotextur weniger stark beeinträchtigt wird.

Eine weitere Möglichkeit, den Füllgrad der Poren des Werkstoffs zu variieren, besteht darin, dem Harz Partikel aus Graphit oder Ruß zuzusetzen, die während der Carbonisation nicht schrumpfen.

In einer anderen vorteilhaften Ausführungsform kann während des Pressens eine Struktur in die Reibschicht 14 geprägt worden sein bzw. die Oberfläche strukturiert worden sein.

Gemäß einer weiteren Ausführungsform wird der Harzanteil des Werkstoffs teilweise oder vollständig carbonisiert, beispielsweise durch eine Festphasenpyrolyse in inerter Atmosphäre bei 800 - 1500 °C in Kohlenstoff umgewandelt. Damit ergibt sich ein Verbundwerkstoff, dessen Matrix aus Kohlenstoff besteht und mit einem Carbonfasergewebe verstärkt wird (Carbonfaserverstärkter Kohlenstoff "CFC"). Bei der Carbonisierung schrumpft die Harzschicht infolge des Masseverlustes durch die Abspaltung flüchtiger Bestandteile.

## Patentansprüche

1. Verwendung eines ein Kohlefasergewebe (8) und einen Kunststoff umfassenden verdichteten Werkstoffs für einen Synchronring (10) mit einem Tragkörper (5) aus Metall, umfassend eine konische Reibfläche (9), wobei der verdichtete Werkstoff als eine Reibschicht (14) mit einer Dicke von 0,2mm bis 0,6mm auf der Reibfläche (9) des Synchronrings (10) aufgebracht ist, und wobei der Werkstoff derart verdichtet ist, dass die Reibschicht (14) bei einer Flächenpressung mit 10 N/mm² eine Dickenänderung von weniger als 0,015 mm aufweist.

2. Verwendung nach Anspruch 1,
**dadurch gekennzeichnet,**
**dass** der Werkstoff derart verdichtet ist, dass die Reibschicht (14) bei einer Flächenpressung mit 10 N/mm² eine Dickenänderung von weniger als 0,01 mm aufweist.

3. Verwendung nach Anspruch 1 oder 2,
**dadurch gekennzeichnet, dass** der Werkstoff aus dem Kohlefasergewebe (8) und einem Harz, insbesondere einem Phenolharz, hergestellt ist.

4. Verwendung nach Anspruch 3,
**dadurch gekennzeichnet,**
**dass** der Werkstoff derart temperaturbehandelt ist, dass ein Harzanteil in Kohlenstoff umgesetzt ist.

5. Verwendung nach Anspruch 4,
**dadurch gekennzeichnet,**
**dass** der Kohlenstoff in amorpher Form und/oder als Graphit vorliegt.

## Claims

1. Use of a compacted material comprising a carbon fibre fabric (8) and a plastic for a synchronizer ring (10) with a metal support body (5), comprising a conical friction surface (9), wherein the compacted material is applied to the friction surface (9) of the synchronizer ring (10) as a friction layer (14) with a thickness of from 0.2 mm to 0.6 mm, and wherein the material is compacted in such a manner that under a surface pressure of 10 N/mm² the friction layer (14) undergoes a change in thickness of less than 0.015 mm.

2. Use according to Claim 1, **characterized in that** the material is compacted in such a manner that under a surface pressure of 10 N/mm² the friction layer (14) undergoes a change in thickness of less than 0.01 mm.

3. Use according to Claim 1 or 2, **characterized in that** the material is produced from a carbon fiber fabric (8) and a resin, in particular a phenolic resin.

4. Use according to Claim 3, **characterized in that** the material has been heat-treated in such a manner as to convert a resin fraction into carbon.

5. Use according to Claim 4, **characterized in that** the carbon is in amorphous and/or graphite form.

## Revendications

1. Utilisation d'un matériau compressé comprenant un tissage de fibres de carbone (8) et une matière plastique pour un anneau de synchronisation (10) doté d'un corps support (5) en métal, comprenant une surface de frottement conique (9), le matériau compressé étant appliqué dans une épaisseur de 0,2 mm à 0,6 mm sous forme d'une couche de frottement (14) sur la surface de frottement (9) de l'anneau de synchronisation (10) et le matériau étant compressé de manière à ce que la couche de frottement (14), en cas d'une pression surfacique de 10 N/mm², présente une modification d'épaisseur de moins de 0,015 mm.

2. Utilisation selon la revendication 1,
**caractérisée en ce que**
le matériau est compressé de manière à ce que la couche de frottement (14), en cas d'une pression surfacique de 10 N/mm², présente une modification d'épaisseur de moins de 0,01 mm.

3. Utilisation selon la revendication 1 ou 2,
**caractérisée en ce que**
le matériau est fabriqué à partir du tissage de fibres de carbone (8) et d'une résine, notamment une résine phénolique.

4. Utilisation selon la revendication 3,
**caractérisée en ce que**
le matériau est traité thermiquement de manière à convertir une partie de la résine en carbone.

5. Utilisation selon la revendication 4,
**caractérisée en ce que**
le carbone se présente sous forme amorphe et/ou sous forme de graphite.
